(19) Europäisches Patentamt
European Patent Office
Office européen des brevets

(11) **EP 2 538 364 A1**

(12) **EUROPEAN PATENT APPLICATION**

(43) Date of publication:
**26.12.2012 Bulletin 2012/52**

(51) Int Cl.:
***G06F 21/00*** *(2006.01)*  ***G06F 21/20*** *(2006.01)*

(21) Application number: **11305786.3**

(22) Date of filing: **22.06.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Oberthur Technologies**
**92300 Levallois-Perret (FR)**

(72) Inventors:
• **Prouff, Emmanuel**
  **92000 Nanterre (FR)**
• **Dottax, Emmanuelle**
  **92000 Nanterre (FR)**

(74) Representative: **Pecher, Gilles et al**
**Cabinet Beau de Loménie**
**158, rue de l'Université**
**75340 Paris Cedex 07 (FR)**

(54) **Data carrier and method performed by the data carrier**

(57)    The invention relates to a data carrier (1) having a security feature, said data carrier (1) including: - a data processor (10), - a memory (13) wherein a PIN is stored, and - a communication interface (14). The data carrier (1) is remarkable in that: - the data carrier further includes a random code generator (11) for obtaining a randomly generated code (X) and an output device (15) for outputting said randomly generated code (X) to a user, and - the data processor (10) is arranged to determine a first modified PIN from said PIN and said randomly generated code (X), wherein the communication interface is arranged for obtaining a second modified PIN entered by the user on an input terminal (2), and - the data processor (10) is further arranged to compare said first modified PIN and said second modified PIN.

FIG.1

EP 2 538 364 A1

**Description**

Introduction

The invention relates to a data carrier having means to change a personal identification number (PIN), a password or a passcode associated with the data carrier for authenticating a user. In particular but not exclusively, the invention relates to the use of a modified PIN for improving security.

Background of the invention

It has been known to use a smart card and a PIN for the authentication of the bearer of the smart card. Typically, a user inserts a smart card in the card reader of a terminal, for example a personal computer (PC) or an ATM. Then, the user enters his PIN through the input interface of the terminal. If the PIN match data held on the terminal, the user is authenticated and access to a service which requires authentication is authorised, for example, access to the server of a bank is authorised.

However, the use of a fixed PIN may leave the user vulnerable to security abuse, for example in case of PIN theft. Consequently, the use of a modified PIN for each transaction has been proposed for improving the security.

An example of a system using a modified PIN is described in US 2005/0139658. In this system, random data series are displayed on the screen of the input terminal. The user determines a modified PIN from his standard PIN, a preselected transformation, and the random data series. Since the random data series changes on each transaction, the entered modified PIN cannot be reused by a third person in case of PIN theft. Consequently, security is improved; however, in this system, the input terminal has access to both the modified PIN and the random data series and amendment of the PIN is controlled by way of the input terminal. This may lead to security abuse in case the input terminal has been subject to fraud and the original PIN can be retrieved from the modified PIN and the random data series.

Thus, there is a need for improving the security of the authentication of a user with a PIN.

Summary of the invention

The invention has been achieved in consideration of the above problems and provides a data carrier having a security feature, said data carrier including: - a data processor, - a memory wherein a PIN is stored, and - a communication interface.

The data carrier is remarkable in that:

- the data carrier further includes a random code generator for obtaining a randomly generated code and an output device for outputting said randomly generated code to a user, and

- the communication interface is arranged for obtaining a modified PIN entered by the user on an input terminal, and
- the data processor is arranged for determining a match between the PIN, the randomly generated code and the modified PIN.

The use of a modified PIN protects against PIN theft. Moreover, since the randomly generated code is obtained and output by the security device, the input terminal does not need to have access to the randomly generated code. In contrast, the input terminal may have access only to the entered modified PIN. Consequently, even if the input terminal has been subjected to fraud, it is difficult for a third person to retrieve the original PIN. Hence, security is improved.

In an embodiment, the output device is arranged for outputting said randomly generated code on the security device.

For example, the output device includes a display device. This display device may include a set of LEDs.

The output device may include a touch sensitive output device.

In an embodiment, the output device is arranged for sending a message including the randomly generated code in the form of a CAPTCHA image to the input terminal.

The data processor may be arranged for performing a secure action when a match between the PIN, the randomly generated code and the modified PIN occurs.

The secure action may comprise a communication with a distant server, on a secure channel, through said input terminal.

The secure action may comprise the execution of a command in response to a message received from the input terminal.

The data processor may be arranged for determining a match between the PIN, the randomly generated code and the modified PIN by:

- determining a second modified PIN from said PIN and said randomly generated code,
- comparing the modified PIN with the determined second modified PIN.

In an alternative embodiment, the data processor is arranged for determining a match between the PIN, the randomly generated code and the modified PIN by:

- determining a second PIN from said modified PIN and said randomly generated code,
- comparing the PIN with the determined second PIN.

The invention also provides a system comprising an input terminal and a data carrier according to the invention, wherein the input terminal comprises an input interface wherein the user can enter the modified PIN, and a communication interface for sending the entered modified PIN to the data carrier.

The invention also provides an authentication method performed by a data carrier which comprises a memory wherein a PIN is stored,
characterized in that it comprises the steps of:

- obtaining a randomly generated code,
- outputting said randomly generated code to a user,
- obtaining a modified PIN entered by the user on an input terminal, and
- determining a match between the PIN, the randomly generated code and the modified PIN.

In an embodiment, the method comprises the step of performing a secure action when a match between the PIN, the randomly generated code and the modified PIN occurs.

Furthermore, the invention provides a computer program comprising instructions for implementing the method according to the invention when said instructions are executed by a computer.

The continuing updating of the new PIN each time the data carrier is used provides a security feature that is continually updated thereby providing an enhanced way of keeping the data carrier safe and secure.

Brief description of the drawings

These and other objects and features of the present invention will become clear from the following description of the preferred embodiments given with reference to the accompanying drawings, in which:

- Figure 1 represents a system according to an embodiment of the invention,
- Figure 2 is a flowchart of a method according to an embodiment of the invention, implemented by the smart card of the system of Figure 1,
- Figure 3 is a flowchart of a method implemented by the PC of the system of Figure 1,
- Figure 4 shows an example of the display device of the smart card of the system of Figure 1.

Detailed description of a preferred embodiment

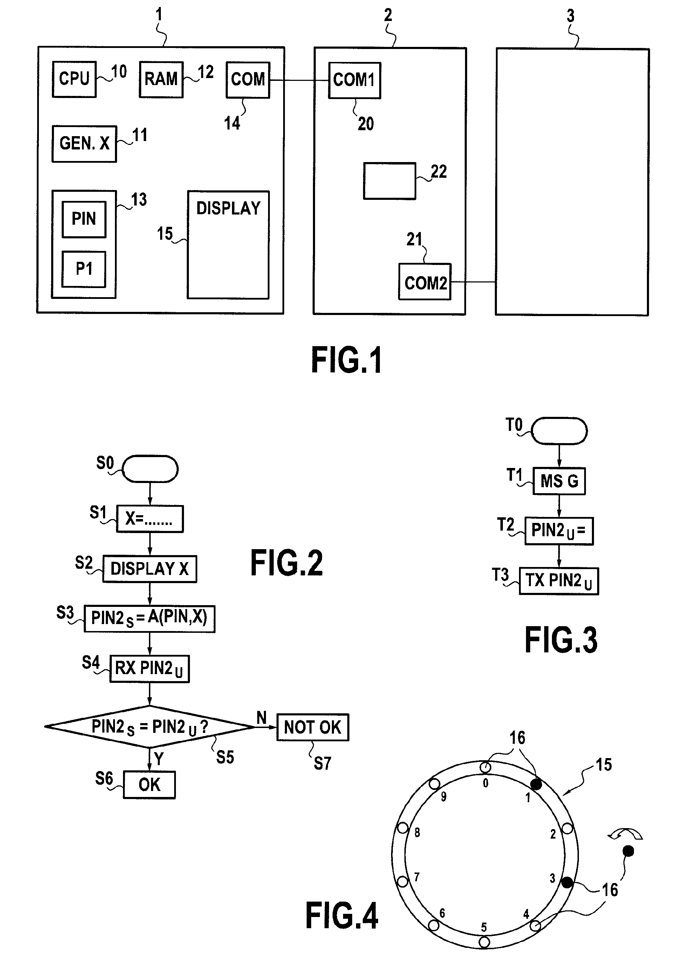

**Figure 1** shows a smart card 1, a personal computer 2 and a server 3.

The smart card 1 has the general architecture of a computer and comprises a microprocessor 10, a random code generator 11, a RAM 12, a ROM 13, a communication interface 14, and a display device 15. The microprocessor 10 can execute computer programs stored in ROM 13 by using RAM 12.

A PIN is stored in ROM 13. Knowledge of the PIN is shared by the smart card 1 and a user. Within the context of this description, the term "PIN" will be used to designate a personal identification number, a password, a passcode or the like. A PIN may be for example a group of 4 or 8 numbers, a chain of alphanumerical characters or the like.

The communication interface 14 allows the smart card 1 to communicate with personal computer 2, through communication interface 20 of the personal computer 2. For example, the communication interface 20 is a card reader wherein the smart card 1 may be inserted. In another example, communication interfaces 14 and 20 are wireless communication interfaces.

Random code generator 11 may comprise for example hardware circuit adapted for generating a random number, a computer program stored in ROM 13 and adapted for generating a random number when executed by microprocessor 10, or a combination thereof. The generation of a random number is known to the skilled person and will not be described in detail.

The personal computer 2 comprises the communication interface 20, another communication interface 21 and an input interface 22. The communication interface 21 allows the personal computer 2 to communicate with the server 3. The communication interface 21 comprises for example a network card or a modem providing access to the Internet. The input interface 22 allows a user of personal computer 2 to enter data, and comprises for example a keyboard and a mouse.

The functioning of the system of figure 1 will be described now, with reference to **Figures 2 and 3.** Figure 2 is a flowchart of the method implemented by the smart card 1, and Figure 3 is a flowchart of the method implemented by the personal computer 2. In this embodiment, the method of Figure 2 corresponds to the execution of a computer program P1 stored in ROM 13 by microprocessor 10. Similarly, the method of Figure 3 corresponds to the execution of a computer program by personal computer 2.

Both methods begin when communication is established between the smart card 1 and the personal computer 2, for example when the smart card 1 is inserted in the card reader of personal computer 2 (step S0 of Figure 2 and step T0 of Figure 3).

Then, the smart card 1 obtains randomly generated code X from the random code generator 11 (step S1), and displays the code X on the display device 15 (step S2). The smart card 1 also determines a modified PIN, named $PIN2_S$, from the PIN stored in ROM 13, the code X and an algorithm A (step S3):

$$PIN2_S = A(PIN, X)$$

Note that although Figure 2 shows step S3 after step S2, these steps may be performed simultaneously or in the reverse order.

Meanwhile, the personal computer 2 prompts a user to enter a modified PIN (step T1). The user (who shares knowledge of the PIN with the smart card 1) looks at code X on the display device 15 and determines a modified PIN, named $PIN2_U$, from the PIN, the code X and algorithm A:

$$PIN2_U = A(PIN, X)$$

The modified PIN entered by the user is received by personal computer 2 (step T2) and sent to the smart card 1 (step T3). Consequently, the smart card 1 receives the modified PIN $PIN2_U$ (step S4). Then, the smart card 1 compares the modified PINs $PIN2_S$ and $PIN2_U$ (step S5).

If $PIN2_S$ and $PIN2_U$ match, the user is authenticated and a secure action is performed (step S6).

In an embodiment, the secure action comprises a communication on a secure channel from the smart card 1 to the server 3, through personal computer 2. The establishment of such communication is known to the skilled person and will not be described in detail.

In another, preferred embodiment, the secure action comprises the execution of a command in response to a message received from the personal computer 2.

On the other hand, if $PIN2_S$ and $PIN2_U$ do not match, the user is not authenticated and the secure action is not performed (step S7).

The system of Figure 1 is protected against PIN theft. Indeed, even if a third person observes the user while he enters a modified $PIN2_U$ (step T2) for a first transaction, the stolen $PIN2_U$ would be based on a random code X specific to this first transaction. Hence, the stolen $PIN2_U$ would not match the modified $PIN2_S$ of a second transaction, based on a different random code X. Furthermore, if a person sees X he or she is not able to complete the transaction as he/she does not know the PIN and X does a not give any information about the PIN. It is also not possible to predict the next $PIN2_U$ if the algorithm A is selected appropriately.

Moreover, the random code X is displayed on the smart card 1. This means that the personal computer 2 does not have access to the random code X. As can be seen on Figure 3, the personal computer 2 has only access to $PIN2_U$. If algorithm A is selected appropriately, it is not possible to retrieve the stored PIN from an entered $PIN2_U$ or a list of entered $PIN2_U$. This means that even if the personal computer 2 has been subjected to fraud and memorises the entered $PIN2_U$, a third person cannot retrieve the original stored PIN and cannot be authenticated. In other words, security of the authentication is improved.

Algorithm A has the following properties:

A1. Algorithm A is such that $PIN2_U = A (PIN, X)$ is easily computable by a human.
A2. Optionally, algorithm A is such that PIN cannot be retrieved unambiguously from X and $PIN2_U$.
A3. Algorithm A is such that it is not possible to retrieve PIN from $PIN2_U$.

An example the display device 15 and of an algorithm A which satisfies properties A1 and A3 will now be described, with reference with **Figure 4.**

In this example, the display device 15 comprises typically eleven $LED_S$ 16. Ten $LED_S$ 16 are arranged in a circle and labelled from "0" to "9", respectively. Another LED 16 is labelled with a contraclockwise arrow. Here, random code X is a chain of eleven random bits, wherein each bit correspond to one of the $LED_S$ 16. The display device 15 comprises a drive circuit (not shown) which turns ON or OFF each LED 16 depending on the value of the corresponding bit: A "1" bit corresponds to a LED 16 which emits light and a "0" bit corresponds to a LED 16 which does not emit light. Such display device 15 can be manufactured and included in the smart card 1 easily and for a low cost.

In this example, PIN is a four digit number and algorithm A is performed by repeating the following steps for each digit of the PIN:

- The user looks and the LED 16 labelled with the digit.
- If the LED 16 is lit (i.e. it is ON), the digit remains unchanged.
- If the LED is not lit (i.e. it is OFF), the user circles the $LED_S$ 16 in the clockwise or contraclockwise direction (depending on the state of the LED 16 labelled with an arrow), until he finds the next LED 16 which is ON. The digit is changed to the label of the later LED 16.

This will now be illustrated by an example. In this example, the PIN is "1234". Furthermore, as shown on Figure 4, the LED 16 labelled "1", "3" are ON and the LED 16 labelled with an arrow indicates the contraclockwise direction.

The first digit of the PIN is "1". Thus, the user looks at the LED labelled "1". Since it is ON, the first digit of the modified PIN will also be "1".

The second digit of the PIN is "2". Here, the LED labelled "2" is OFF. Thus, the user circles the LEDs 16 in the contraclockwise direction until he reaches the next LED which is ON, that is the LED labelled "1". Thus, the second digit of the modified PIN is "1".

The third digit of the PIN is "3". Thus, the user looks at the LED labelled "3". Since it is ON, the third digit of modified PIN will also be "3".

The fourth digit of the PIN is "4". Here, the LED labelled "4" is OFF. Thus, the user circles the LED 16 in the contraclockwise direction, and reaches the LED labelled "3". Thus, the fourth digit of the modified PIN is "3".

Hence, in this example, the modified PIN $PIN2_U$ is "1133".

With this algorithm, the modified PIN is easily computable by the user. Furthermore, it is not possible to determine the PIN from the modified PIN.

In the example of Figure 1, the code X is visually output to the user on the smart card 1, by the display device 15. In another embodiment, the code X is output to the user on the smart card 1 in a touch sensitive manner. For example, the smart card 1 comprises an output device capable of outputting the code X by heating some portion(s) of the smart card 1, or by modifying the relief of some portion(s) of smart card 1. In another embodiment, the code X is output to the user on the smart card 1 in an audible manner. For example, the smart card 1 comprises an output device capable of outputting the code X by emitting a sound. Visual, touch sensitive and/or audible output of the code X may also be combined. In all case, the code X is output by the smart card 1, without interaction with the personal computer 2. Hence, as in the embodiment of Figure 1, the personal computer 2 does not have access to the code X and security is improved.

In another embodiment, the code X is output by the smart card 1 by sending a message including code X to personal computer 2, through communication interfaces 14 and 20. The message including code X is displayed on a screen of the personal computer 2. Preferably, the message includes code X in the form of a CAPTCHA image, that is an image wherein code X is shown in a manner understandable by the user of personal computer 2, but which cannot be easily deciphered by conventional OCR techniques. Thus, in a similar manner as above, personal computer does not have access to the code X and security is improved. Security is further improved if algorithm A satisfies the above-mentioned property A2.

In the embodiment described above, the smart card 1 determines $PIN2_S$ from the PIN stored in ROM 13, the code X and algorithm A (step S3), and compares the determined $PIN2_S$ with the entered $PIN2_U$ (step S5). This allows determining a match between the PIN stored in ROM 13, the code X and the entered $PIN2_U$.

In an alternative embodiment, the smart card determines a match between the PIN stored in ROM 13, the code X and the entered $PIN2_U$ by a reverse comparison. More precisely, the smart card 1 determines a PIN, named $PIN_0$, from the code X, the entered $PIN2_U$ and an algorithm A' which is the reverse function of the algorithm A. Then, the smart card compares $PIN_0$ with the PIN stored in ROM 13.

The invention has been described with reference to a smart card 1. However, any data carrier wherein a PIN may be stored can be used for implementing the invention. For example, the data carrier may be a mobile telephone, a personal digital assistant, a media player...

Similarly, the invention has been described with reference to a personal computer 2. However, any type of input terminal capable of communication with the data carrier can be used for implementing the invention, for example a payment terminal.

In the embodiment described above, the PIN stored in ROM 13 remains unchanged. To be clear, the invention also covers the situation where the initial PIN is stored in a non-volatile memory and it is updated on a continual basis, for example to improve security. When the PIN is updated, the $PIN2_S$ and $PIN2_U$ are compared based on the knowledge of the user of the card of their updated PIN.

It is to be understood that the above embodiments have been provided only by way of exemplification of this invention, and that further modifications and improvements thereto, as would be apparent to persons skilled in the relevant art, are deemed to fall within the broad scope and ambit of the present invention described. Furthermore where individual embodiments are discussed, the invention is intended to cover combinations of those embodiments as well.

## Claims

1. A data carrier (1) having a security feature, said data carrier (1) including:

   - a data processor (10),
   - a memory (13) wherein a PIN is stored, and
   - a communication interface (14),

   **characterized in that**:

   - the data carrier further includes a random code generator (11) for obtaining a randomly generated code (X) and an output device (15) for outputting said randomly generated code (X) to a user, and
   - the communication interface is arranged for obtaining a modified PIN ($PIN2_U$) entered by a user on an input terminal (2), and
   - the data processor (10) is arranged for determining a match between the PIN, the randomly generated code (X) and the modified PIN ($PIN2_U$).

2. A data carrier (1) according to claim 1, wherein the output device (15) is arranged for outputting said randomly generated code (X) on the security device (1).

3. A data carrier (1) according to claim 2, wherein the output device (15) includes a display device.

4. A data carrier (1) according to claim 3, wherein said display device includes a set of LEDs (16).

5. A data carrier (1) according to one of claims 2 to 4, wherein the output device (15) includes a touch sensitive output device.

6. A data carrier (1) according to one of claims 1 to 5, wherein the output device is arranged for sending a message including the randomly generated code (X) in the form of a CAPTCHA image to the input terminal (2).

7. A data carrier (1) according to one of claims 1 to 6, wherein the data processor (10) is arranged for performing a secure action when a match between the PIN, the randomly generated code (X) and the modified PIN ($PIN2_U$) occurs.

8. A data carrier (1) according to claim 7, wherein the secure action comprises a communication with a distant server, on a secure channel, through said input terminal.

9. A data carrier (1) according to claim 7, wherein the secure action comprises the execution of a command in response to a message received from the input terminal.

10. A data carrier (1) according to one of claims 1 to 9, wherein the data processor (10) is arranged for determining a match between the PIN, the randomly generated code (X) and the modified PIN ($PIN2_U$) by:

    - determining a second modified PIN ($PIN2_S$) from said PIN and said randomly generated code (X),
    - comparing the modified PIN ($PIN2_U$) with the determined second modified PIN ($PIN2_S$).

11. A data carrier (1) according to one of claims 1 to 9, wherein the data processor (10) is arranged for determining a match between the PIN, the randomly generated code (X) and the modified PIN ($PIN2_U$) by:

    - determining a second PIN from said modified PIN ($PIN2_U$) and said randomly generated code (X),
    - comparing the PIN with the determined second PIN.

12. System comprising an input terminal (2) and a data carrier (1) according to one of claims 1 to 11, wherein the input terminal includes an input interface (22) wherein the user can enter the modified PIN ($PIN2_U$), and a communication interface (20) for sending the entered modified PIN ($PIN2_U$) to the data carrier (1).

13. Authentication method performed by a data carrier (1) which includes a memory (13) wherein a PIN is stored,
    **characterized in that** it comprises the steps of:

    - obtaining (S1) a randomly generated code (X),
    - outputting (S2) said randomly generated code (X) to a user,
    - obtaining (S4) a modified PIN ($PIN2_U$) entered by the user on an input terminal (2), and
    - determining a match between the PIN, the randomly generated code (X) and the modified PIN ($PIN2_U$).

14. Authentication method according to claim 13, comprising the step of performing (S6) a secure action when a match between the PIN, the randomly generated code (X) and the modified PIN ($PIN2_U$) occurs.

15. Computer program (P1) comprising instructions for implementing the method of claim 13 or 14 when said instructions are executed by a computer.

**FIG.1**

**FIG.2**

**FIG.3**

**FIG.4**

Europäisches
Patentamt

European
Patent Office

Office européen
des brevets

# EUROPEAN SEARCH REPORT

Application Number

EP 11 30 5786

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2009 016527 A1 (GIESECKE & DEVRIENT GMBH [DE]) 7 October 2010 (2010-10-07) | 1-3,5,7, 15 | INV. G06F21/00 |
| Y | * the whole document * | 4 | G06F21/20 |
| Y | DE 10 2007 058547 A1 (GIESECKE & DEVRIENT GMBH [DE]) 10 June 2009 (2009-06-10) * the whole document * | 4 | |
| X | US 2008/201578 A1 (DRAKE CHRISTOPHER NATHAN [AU]) 21 August 2008 (2008-08-21) * the whole document * | 1-5,7-15 | |
| X | DE 10 2009 035004 A1 (GIESECKE & DEVRIENT GMBH [DE]) 3 February 2011 (2011-02-03) * the whole document * | 1-5,7-15 | |
| X | EP 2 182 457 A1 (GEMALTO SA [FR]) 5 May 2010 (2010-05-05) * the whole document * | 6 | |
| X | EP 1 933 252 A1 (AXALTO SA [FR]) 18 June 2008 (2008-06-18) * paragraph [0040] * | 6 | TECHNICAL FIELDS SEARCHED (IPC) G06F |

The present search report has been drawn up for all claims

| Place of search | Date of completion of the search | Examiner |
|---|---|---|
| Munich | 3 January 2012 | Kleiber, Michael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patent application does not comply with the
requirements of unity of invention and relates to several inventions or groups of inventions, namely:

```
    1. claims: 1-5, 7-15

        Data carrier with display for displaying a random code.
                        ---

    2. claim: 6

        Data carrier that sends a randomn code in the form of a
        CAPTCHA  image to a terminal.
                        ---
```

## ANNEX TO THE EUROPEAN SEARCH REPORT
## ON EUROPEAN PATENT APPLICATION NO.

EP 11 30 5786

This annex lists the patent family members relating to the patent documents cited in the above-mentioned European search report.
The members are as contained in the European Patent Office EDP file on
The European Patent Office is in no way liable for these particulars which are merely given for the purpose of information.

03-01-2012

| Patent document cited in search report | | Publication date | Patent family member(s) | | Publication date |
|---|---|---|---|---|---|
| DE 102009016527 | A1 | 07-10-2010 | DE 102009016527 A1<br>WO    2010115663 A1 | | 07-10-2010<br>14-10-2010 |
| DE 102007058547 | A1 | 10-06-2009 | DE 102007058547 A1<br>EP        2229655 A1<br>US    2010252639 A1<br>WO    2009071305 A1 | | 10-06-2009<br>22-09-2010<br>07-10-2010<br>11-06-2009 |
| US 2008201578 | A1 | 21-08-2008 | NONE | | |
| DE 102009035004 | A1 | 03-02-2011 | NONE | | |
| EP 2182457 | A1 | 05-05-2010 | EP        2182457 A1<br>WO    2010049257 A1 | | 05-05-2010<br>06-05-2010 |
| EP 1933252 | A1 | 18-06-2008 | NONE | | |

EPO FORM P0459

## REFERENCES CITED IN THE DESCRIPTION

### Patent documents cited in the description

- US 20050139658 A